# EUROPEAN PATENT APPLICATION

(11) **EP 2 827 265 A1**
(43) Date of publication of application: **21.01.2015**
(21) Application number: 13306025.1
(22) Date of filing: 17.07.2013
(51) Int. Cl.: G06F 21/10, G06F 21/62, G06Q 50/00, H04L 29/06

(54) **Protecting shared content in a network**

(71) Applicant: ALCATEL LUCENT, 92100 Boulogne-Billancourt (FR)
(72) Inventor: Theeten, Bart Antoon Rika, 2018 Antwerp (BE); Janssens, Nico Nj, 2018 Antwerp (BE)
(74) Representative: Mouney, Jérôme

(57) **Abstract**

For protecting content that is to be sent toward an application server (AS) from a user terminal (UTO) of the owner of the content within a telecommunication network (TN), a server (LS) receives a message from a controlling device (CD) having intercepted a request from the user terminal (UTO) for uploading a content in the application server (AS), the message containing a symmetric key (K) for encryption of a content and an identifier (ldC) of the content.

The server further receives a license request from a media device (MD), the license request containing a public key (Pu) and the identifier (ldC) of the content, generates a temporary key (Kt) by encrypting the symmetric key (K) with the public key (Pu), and sends a license response to the media device (MD), the license response containing a temporary key (Kt).

## Description

### FIELD OF THE INVENTION

The present invention pertains to the control of sensitive data in telecommunication networks. More particularly, the invention relates to a system for protecting content posted on websites in a telecommunication network.

### BACKGROUND

With the ever-increasing popularity of social media, privacy concerns are becoming more and more dramatic. Social networking services allow people to upload content (such as pictures, movies), making this content available to other people (friends). These friends can then comment and share this content further with their friends, and so on. Furthermore, the distributed nature of these social media enables to spread popular content globally in a very short time (viral behavior).

Even if public Internet services would offer the ability to remove published data from their servers, the distributed nature of the Internet and the adoption of various layers of caching make it almost impossible to effectively remove every single instance of a datum.

When users publish information (share) on the Internet, they often don't realize they may regret having published this content at a later date. Especially children don't understand the consequences of these actions. So when they regret it later, there is currently no way of getting rid of that information, because it may have been spread virally over the Internet.

There is a need to protect, with the possibility to unshared or revoke, content or information after it has been made available via a public Internet service, such as a social network.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for protecting content that is to be sent toward an application server from a user terminal of the owner of the content within a telecommunication network, comprising the following steps in a controlling device:
receiving a request from the user terminal for uploading a content in the application server, the request containing said content,
encrypting the content with a symmetric key,
sending a message to a licensing server, the message containing the symmetric key and an identifier of the content,
sending another request to one of the user terminal and the application server, the request containing the encrypted content, an address of the licensing server and the identifier of the content.

In an embodiment, the method further comprises the following steps in a media device of another user:
sending an access request for accessing the content to the application server,
receiving an access response from the application server, the access response containing the address of the licensing server, the encrypted content and the identifier of the content.

In an embodiment, the encrypted content embeds the address of the licensing server and the identifier of the content.

In an embodiment, the method further comprises the following steps in the media device:
sending a license request to the licensing server, the license request containing a public key and the identifier of the content,
receiving a license response from the licensing server, the license response containing a temporary key generated by encrypting the symmetric key with the public key.

In an embodiment, the method further comprises the following steps in the media device:
decrypting the temporary key with a private key associated with the public key and retrieving the symmetric key,
decrypting the encrypted content with the symmetric key.

Advantageously, the invention provides a solution to protect and unshare content that was previously shared on the public Internet. The invention uses two levels of encryption to protect the content being shared, at the time of sharing. The first level of encryption uses a symmetric encryption algorithm to encrypt the content itself. The second level of encryption uses an asymmetric encryption algorithm (e.g. public-private key encryption) to encrypt the symmetric encryption key,

The symmetric encryption key can be encrypted along with a TTL (time-to-live) for that key. The TTL indicates how long a trusted player is allowed to decode the symmetric key with the asymmetric key that is associated with this TTL. In order to continue to view the unencrypted form of the content past the initial TTL, a new key must be requested from a licensing server. If the content owner decides the content should no longer be shared, the content owner removes the symmetric key from the content licensing system, which leads to new licensing requests for that content to fail. As such, the content will no longer be available, no matter how many copies exist and no matter where the content copies currently reside

In an embodiment, the temporary key is generated by encrypting the symmetric key with the public key and a given duration, and the media device retrieves the given duration by decrypting the temporary key and is allowed to decrypt the encrypted content with the symmetric key during said given duration.

The invention also pertains to a method for protecting content that is to be sent toward an application server from a user terminal of the owner of the content within a telecommunication network, comprising the following steps in a media device:
sending an access request for accessing a content to an application server, the application server having received a request containing an encrypted content, an address of a licensing server and an identifier of the content,
receiving an access response from the application server, the access response containing the address of the licensing server, the encrypted content and the identifier of the content.
sending a license request to the licensing server, the license request containing a public key and the identifier of the content, the licensing server having previously received a message containing a symmetric key for the encryption of the content and an identifier of the content,
receiving a license response from the licensing server, the license response containing a temporary key generated by encrypting the symmetric key with the public key,
decrypting the temporary key with a private key associated with the public key and retrieving the symmetric key,
decrypting the encrypted content with the symmetric key.

The invention also pertains to a method for protecting content that is to be sent toward an application server from a user terminal of the owner of the content within a telecommunication network, comprising the following steps in a server:
receiving a message from a controlling device having received a request from the user terminal for uploading a content in the application server, the message containing a symmetric key for encryption of a content and an identifier of the content,
receiving a license request from a media device, the license request containing a public key and the identifier of the content,
generating a temporary key by encrypting the symmetric key with the public key,
sending a license response to the media device, the license response containing a temporary key.

The invention also pertains to a device for protecting content that is to be sent toward an application server from a user terminal of the owner of the content within a telecommunication network, the device comprising:
means for receiving a request for uploading a content in the application server, the request containing said content,
means for encrypting the content with a symmetric key,
means for sending a message to a server, the message containing the symmetric key and an identifier of the content,
means for sending another request to the application server, the request containing the encrypted content, an address of the server and the identifier of the content

The invention also pertains to a device for protecting content that is to be sent toward an application server from a user terminal of the owner of the content within a telecommunication network, the device comprising:
means for sending an access request for accessing a content to an application server, the application server having received a request containing an encrypted content, an address of a licensing server and an identifier of the content,
means for receiving an access response from the application server, the access response containing the address of the licensing server, the encrypted content and the identifier of the content.
means for sending a license request to the licensing server, the license request containing a public key and the identifier of the content, the licensing server having previously received a message containing a symmetric key for the encryption of the content and an identifier of the content,
means for receiving a license response from the licensing server, the license response containing a temporary key generated by encrypting the symmetric key with the public key,
means for decrypting the temporary key with a private key associated with the public key and retrieving the symmetric key,
means for decrypting the encrypted content with the symmetric key.

The invention also pertains to a server for protecting content that is to be sent toward an application server from a user terminal of the owner of the content within a telecommunication network, the server comprising:
means for receiving a message from a controlling device having received a request from the user terminal for uploading a content in the application server, the message containing a symmetric key for encryption of a content and an identifier of the content,
means for receiving a license request from a media device, the license request containing a public key and the identifier of the content,
means for generating a temporary key by encrypting the symmetric key with the public key,
means for sending a license response to the media device, the license response containing a temporary key.

The invention also pertains to a system for protecting content that is to be sent toward an application server from a user terminal of the owner of the content within a telecommunication network, the system comprising:
means for receiving a request from the user terminal for uploading a content in the application server, the request containing said content,
means for encrypting the content with a symmetric key,
means for sending a message to a server, the message containing the symmetric key and an identifier of the content,
means for sending another request to the application server, the request containing the encrypted content, an address of the server and the identifier of the content,
means for sending an access request for accessing a content to the application server,
means for receiving an access response from the application server, the access response containing the address of the licensing server, the encrypted content and the identifier of the content.
means for sending a license request to the licensing server, the license request containing a public key and the identifier of the content, the licensing server having previously received a message containing a symmetric key for the encryption of the content and an identifier of the content,
means for receiving a license response from the licensing server, the license response containing a temporary key generated by encrypting the symmetric key with the public key,
means for decrypting the temporary key with a private key associated with the public key and retrieving the symmetric key,
means for decrypting the encrypted content with the symmetric key.

The invention also pertains to computer programs capable of being implemented within devices and a server, said program comprising instructions which, when the program is executed within said devices and server, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a network traffic inspection; and
- FIG. 2 is an algorithm of a method for protecting shared content in a network according to one embodiment of the invention.

The same reference number represents the same element or the same type of element on all drawings.

### DESCRIPTION OF EMBODIMENTS

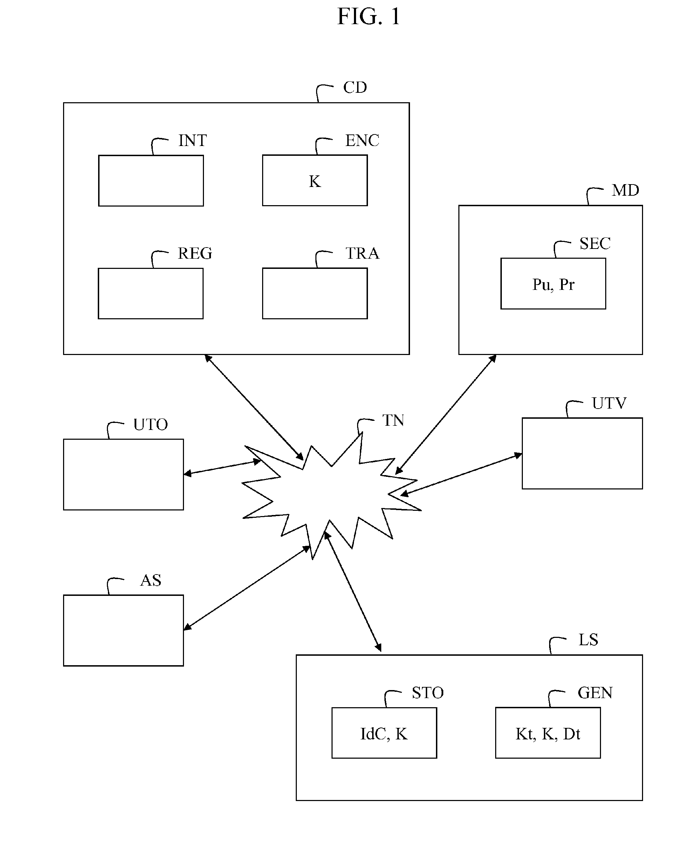

With reference to FIG. 1, a communication system according to the invention comprises a telecommunication network TN, a controlling device CD, a licensing server LS, an application server AS, a media device MD, a user terminal UTO of a content owner and a user terminal UTV of a content viewer, able to communicate between them through the telecommunication network.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

The application server AS represents the part of the business/corporation/social network platform, that can be accessed via a user terminal, connected to the telecommunication network. For instance, the application server AS stores content sent and posted by users in a social network website from their user terminals.

The content can be of any type, being for example under the form of an image file, an audio file, a video file or a text file.

For example, the user terminal UTO of the content owner or the user terminal UTV of the content viewer can be a mobile phone, a computer and a variety of other user equipments for communication.

The controlling device CD comprises an interception module INT, an encryption module ENC, a register module REG and a transmission module TRA.

The controlling device CD can be included in the user terminal UTO of the owner of the content or in a server in the telecommunication network.

In one embodiment, the controlling device CD can take the form of a browser plug-in or a standalone application if included in the user terminal UTO.

In another embodiment, the controlling device CD can take the form of a cloud service or an HTTP proxy plug-in if included in a server.

The interception module INT has functionality for intercepting requests from user terminal for uploading or publishing content.

The encryption module ENC has functionality for encrypting content, with a symmetric key K.

The register module REG has functionality for registering a content's key in the licensing server LS, along with potentially additional information such as a proof-of-ownership identifier.

The transmission module TRA has functionality for forwarding the encrypted content to a destination device, such as the application server AS.

The encrypted content is extended with metadata, including (but not restricted to) a specific mime type that indicates that the encrypted content can be rendered only by a secure/trusted player and a URI (Uniform Resource Identifier) of the licensing server LS for being able to request decoding keys.

The licensing server LS is in charge of storing registered content items. The licensing server LS comprises a storage module STO and a generator module GEN.

The storage module STO stores metadata about the encrypted content, but not the encrypted content itself. This metadata includes (but is not limited to) an identifier IdC of the content, a proof-of-ownership identifier which the content owner must provide in all communication with the LS in order to unshare/reshare a content item, and a symmetric key K. The symmetric key can be used both for encryption and decryption.

The generator module GEN is able to generate a temporary key Kt associated with the symmetric key K and with a given duration Dt, like a TTL (Time-To-Live). The temporary key Kt is the public-key encrypted value of the {K, Dt} pair. The temporary key Kt can be written under the form Kt = Pu(K, Dt), wherein Pu is a public key. The public key Pu used in the encryption is provided by the media device MD in a request for accessing content.

The licensing server LS can be a single server or be part of an entire cluster of servers, either running at a single datacenter or globally distributed across multiple datacenters.

The media device MD is in charge of providing a secure player/renderer.

The media device MD can be included in the user terminal UTV of the content viewer or in a server in the telecommunication network.

In one embodiment, the media device MD can take the form of a browser plug-in or a standalone application if included in the user terminal UTV.

In another embodiment, the media device MD can take the form of a cloud service if included in a server. In this case, it is assumed that the user terminal UTV cannot capture any unencrypted byte of a content and the transit part between the media device MD and the user terminal UTV is secured, for example through a SSL (Secure Sockets Layer) session.

The media device MD comprises a security module SEC able to communicate with the licensing server LS in order to identify itself and prove that it is indeed a trusted player. This identification is for example based on exchanging a security certificate, issued by a trusted organization, with the licensing server LS.

The security module SEC stores a public key Pu and a private key Pr. The security module SEC is able to decode the temporary key Kt with a private key Pr associated with the public key Pu into a pair consisting of he symmetric key K and the associated given duration Dt : Pr(Kt) = {K, Dt}. . The security module SEC is thus able to retrieve the symmetric key K and the associated given duration Dt.

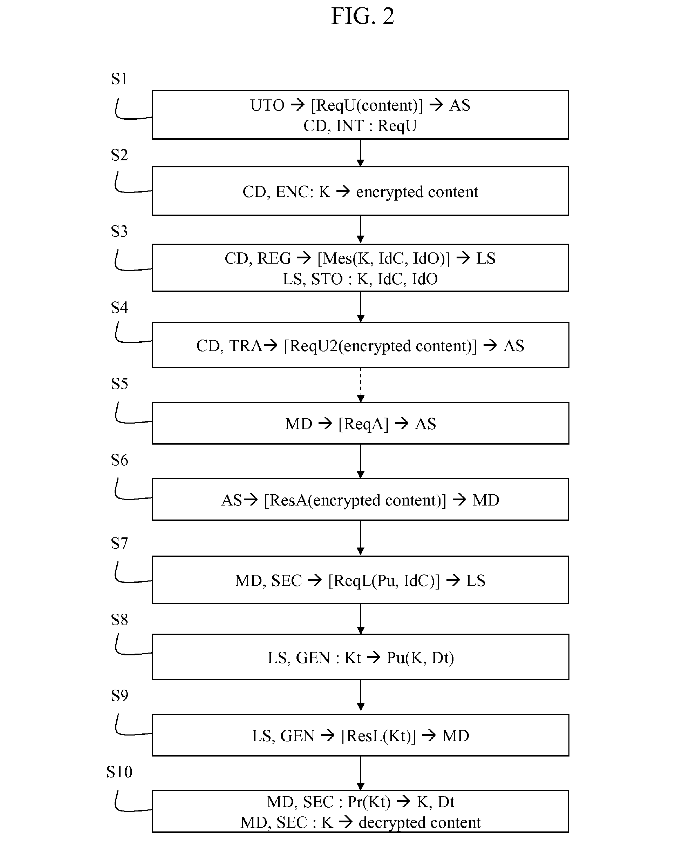

With reference to FIG. 2, a method for protecting shared content in a telecommunication network according to one embodiment of the invention comprises steps S1 to S10 executed within the communication system.

In step S1, the owner of a content wishes to upload the content into an application server AS that hosts for example a social networking service.

The content owner sends a request ReqU for uploading the content from the user terminal UTO in the application server, the request ReqU containing the content to be uploaded.

The interception module INT of the controlling device CD receives the request ReqU.

In one embodiment, the user terminal sends the request directly to the controlling device.

In another embodiment, the user terminal sends the request toward the application server, the controlling device intercepts first the request and then the interception module receives the request.

In step S2, the encryption module ENC encrypts the content with a generated symmetric key K. The result is a new valid piece of content, called encrypted content, according to the original content's mime type, so that it can be displayed by any renderer that supports that mime type. However, the rendered content must not reveal any part of the original content. In addition to the encrypted form of the original content, additional information required to be able to decrypt the content, including the address of the licensing server LS and the identifier IdC of the content, are added to the encrypted content in clear text format.

In step S3, the register module REG sends a message Mes to the licensing server LS for registering a content's key. The message Mes contains the symmetric key K, an identifier IdC of the content, an identifier IdO of the content owner, and optionally a security certificate issued by a trusted organization to identify that this message is generated by a trusted entity.

The storage module STO of the licensing server LS stores in correspondence the symmetric key K, the identifier IdC of the content and the identifier IdO of the content owner.

Optionally, the licensing server LS sends a notification back to the controlling device indicating safe receipt of the message.

In step S4, the transmission module TRA sends a request ReqU2 to the application server AS, the request ReqU2 containing the encrypted content, an address of the licensing server LS and the identifier IdC of the content. Additionally, the request contains metadata including a specific mime type that indicates that the encrypted content can be rendered only by a specific media player, i.e. a secure/trusted player like a media device MD. The encrypted content embeds the address of the licensing server LS and the identifier IdC of the content and is stored by the application server AS. More specifically, the address of the licensing server LS and the identifier IdC of the content embedded in the encrypted content are not encrypted but joined in the same file including the encrypted content.

In another embodiment, the transmission module TRA sends the request ReqU2 to user terminal UTO that forwards the request to the application server AS.

In a variant, the application server AS stores the encrypted content in correspondence with the address of the licensing server LS and the identifier IdC of the content, the address of the licensing server LS and the identifier IdC of the content being not embedded in the encrypted content.

In another variant, the transmission module TRA can also return the request ReqU2 to the user terminal UTO having created the initial request ReqU, such that the user terminal UTO can deliver itself the request ReqU2, containing the encrypted content, to the application server AS. In this case, the CD will not operate as a proxy towards the AS, but instead enables the user terminal UTO to contact the application server AS directly.

In step S5, another user wishes to access the content that was previously uploaded in the application server AS. Said another user sends an access request ReqA for accessing the content from the media device MD to the application server AS.

In step S6, the application server AS identifies the content and the associated address of the licensing server LS, and sends an access response ResA to the media device MD, the access response ResA containing the address of the licensing server LS, the encrypted content and the identifier IdC of the content.

In one embodiment, the encrypted content embeds the address of the licensing server LS and the identifier IdC of the content, so that the application server AS simply returns the requested content as it does for unencrypted content.

In another embodiment, the encrypted content does not embed the address of the licensing server LS and the identifier IdC of the content.

In step S7, the security module SEC of the media device MD receives the access response ResA and sends a license request ReqL to the licensing server LS, the license request ReqL containing a public key Pu related to the security module SEC and the identifier IdC of the content. The public key Pu is associated with a private key Pr only known by the security module SEC.

In step S8, the generator module GEN of the licensing server LS associates a duration Dt with the content and generates a temporary key Kt by encrypting the symmetric key K and the duration Dt with the public key Pu.

In step S9, the generator module GEN sends a license response ResL to the media device MD, containing the temporary key Kt.

In step S10, the security module SEC of the media device MD decrypts the temporary key Kt with the private key Pr and retrieves the symmetric key K and the given duration Dt.

The security module SEC decrypts then the encrypted content with the symmetric key K. The decrypted content can be decrypted and played during given duration Dt. The given duration Dt indicates how long a trusted player, i.e. the media player, is allowed to decode the symmetric key with the asymmetric key that is associated with this TTL.

Steps S6 to S10 are executed if the media device MD does not already have the symmetric key K cached, or finds that the given duration Dt associated with the cached symmetric key K has expired, requesting thus a new temporary key Kt. First, the media device MD checks whether it already has the symmetric key K cached and if so, it checks then the given duration Dt associated with the symmetric key K. If the given duration Dt has not yet expired, the media device MD uses the symmetric key K to decrypt the encrypted content. Else, the media device MD requests a new temporary key Kt.

In an illustrative example, a content owner wants to share content on a destination service, e.g. a social network hosted by the application server AS. In the user terminal UTO, the content owner uses a web browser that has the controlling device CD functionalities installed on it as a plug-in. The content controlling device CD intercepts an upload request towards the application server AS and performs the following steps:
1. encrypt the content with a symmetric key K;
2. register the content with the associated symmetric key K in the licensing server LS. A new item is added to a content ID store that stores at least a unique identification of the content, the symmetric key K and a unique identification of the content owner, used as proof when the owner eventually wishes to withdraw this content;
3. forward the upload request, including the encrypted content to the intended destination, i.e. the application server AS.

A user wishing to view the shared content sends a GET request via his/her web browser towards the application server which hosts this shared content. The application server returns the encrypted content to the browser. The mime-type (e.g. 'application/unshare-protected') of this encrypted content is mapped to media device MD installed as a secure player plugin in the user's browser. The media device MD checks whether it already has the associated key K cached. If so, it checks the TTL associated with the key. If the TTL has not yet expired, the media device MD uses the key K to decode the encrypted content received from the application server AS. If the media device MD does not have the appropriated key K cached, or finds that the TTL of the cached key has expired, it requests a new temporary key Kt from the licensing server LS, passing a public key of the media device MD as a request argument. If and only if the licensing server has the requested content ID in its content ID store, the generator module GEN returns the result of encrypting {K, TTL} with the public key Pu of the requesting media device. This gives Kt=E_Pu({K,TTL}), the public key Pu being used as encryption key. Once the key Kt is received, the secure media device retrieves the key K and the associated TTL as D_Pr(E_Pu({K,TTL})), wherein the private key Pr is used as decryption key, and decrypts the content with the key K. The decrypted content can then be displayed on a screen of the user terminal of the content viewer.

If the content owner no longer wishes a shared content item to be publicly available, he/she can request the licensing server LS to remove the content item (identified by its unique ID) from its content ID store. To prove rightful ownership, the content owner can also provide a proof-of-ownership identifier in this request. All subsequent requests for a new key for that content item will fail and the content can no longer be decoded by any media device. The content is thus effectively unshared.

In a specific embodiment, all media devices have the same private key installed into them. In that case it would be sufficient to generate a single TTL-restricted public key encrypted value of the symmetric key K, usable by all media device. The advantage would be that even the public-key encrypted value of the symmetric key K could be cached in the network and pulled out of the cache by other media devices rather than each media device needing to contact the licensing server. This would therefore benefit the scalability needs of the licensing server.

The invention described here relates to a method, devices and a server for protecting shared content in a telecommunication network. According to one implementation of the invention, steps of the invention are determined by the instructions of computer programs incorporated into a device, such as the controlling device or the media device, incorporated into a server, such as the licensing server. The programs comprise program instructions which, when said programs are loaded and executed within the devices and the server, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for protecting content that is to be sent toward an application server (AS) from a user terminal (UTO) of the owner of the content within a telecommunication network (TN), comprising the following steps in a controlling device (CD):
receiving (S1) a request (ReqU) from the user terminal (UTO) for uploading a content in the application server (AS), the request containing said content,
encrypting (S2) the content with a symmetric key (K),
sending (S3) a message (Mes) to a licensing server (LS), the message containing the symmetric key (K) and an identifier (IdC) of the content,
sending (S4) another request (ReqU2) to one of the user terminal and the application server, the request (ReqU2) containing the encrypted content, an address of the licensing server (LS) and the identifier (IdC) of the content.

2. A method according to claim 1, further comprising the following steps in a media device (MD) of another user:
sending (S6) an access request (ReqA) for accessing the content to the application server (AS),
receiving (S7) an access response (ResA) from the application server (AS), the access response (ResA) containing the address of the licensing server (LS), the encrypted content and the identifier (IdC) of the content.

3. A method according to claim 2, wherein the encrypted content embeds the address of the licensing server (LS) and the identifier (IdC) of the content.

4. A method according to claim 2 or 3, further comprising the following steps in the media device (MD):
sending (S7) a license request (ReqL) to the licensing server (LS), the license request (ReqL) containing a public key (Pu) and the identifier (IdC) of the content,
receiving (S8) a license response (ResL) from the licensing server (LS), the license response (ResL) containing a temporary key (Kt) generated by encrypting the symmetric key (K) with the public key (Pu).

5. A method according to claim 4, further comprising the following steps in the media device (MD):
decrypting (S10) the temporary key (Kt) with a private key (Pr) associated with the public key (Pu) and retrieving the symmetric key (K),
decrypting (S10) the encrypted content with the symmetric key (K).

6. A method according to claim 5, whereby the temporary key (Kt) is generated by encrypting the symmetric key (K) with the public key (Pu) and a given duration (Dt), and the media device (MD) retrieves the given duration (Dt) by decrypting (S10) the temporary key (Kt) and is allowed to decrypt the encrypted content with the symmetric key (K) during said given duration (Dt).

7. A method for protecting content that is to be sent toward an application server (AS) from a user terminal (UTO) of the owner of the content within a telecommunication network (TN), comprising the following steps in a media device (MD):
sending (S5) an access request (ReqA) for accessing a content to an application server (AS), the application server (AS) having received a request (ReqU2) containing an encrypted content, an address of a licensing server (LS) and an identifier (IdC) of the content,
receiving (S6) an access response (ResA) from the application server (AS), the access response (ResA) containing the address of the licensing server (LS), the encrypted content and the identifier (IdC) of the content.
sending (S7) a license request (ReqL) to the licensing server (LS), the license request (ReqL) containing a public key (Pu) and the identifier (IdC) of the content, the licensing server (LS) having previously received a message (Mes) containing a symmetric key (K) for the encryption of the content and an identifier (IdC) of the content,
receiving (S9) a license response (ResL) from the licensing server (LS), the license response (ResL) containing a temporary key (Kt) generated by encrypting the symmetric key (K) with the public key (Pu),
decrypting (S10) the temporary key (Kt) with a private key (Pr) associated with the public key (Pu) and retrieving the symmetric key (K),
decrypting (S10) the encrypted content with the symmetric key (K).

8. A method for protecting content that is to be sent toward an application server (AS) from a user terminal (UTO) of the owner of the content within a telecommunication network (TN), comprising the following steps in a server (LS):
receiving (S3) a message (Mes) from a controlling device (CD) having received a request (ReqU) from the user terminal (UTO) for uploading a content in the application server (AS), the message (Mes) containing a symmetric key (K) for encryption of a content and an identifier (IdC) of the content,
receiving (S7) a license request (ReqL) from a media device (MD), the license request (ReqL) containing a public key (Pu) and the identifier (IdC) of the content,
generating (S8) a temporary key (Kt) by encrypting the symmetric key (K) with the public key (Pu),
sending (S9) a license response (ResL) to the media device (MD), the license response (ResL) containing a temporary key (Kt).

9. A method according to claim 8, further comprising, before generating a temporary key (Kt), exchanging a security certificate with the media device (MD) to prove that this latter is a trusted entity:

10. A device (CD) for protecting content that is to be sent toward an application server (AS) from a user terminal (UTO) of the owner of the content within a telecommunication network (TN), the device (CD) comprising:
means (INT) for receiving a request (ReqU) for uploading a content in the application server (AS), the request containing said content,
means (ENC) for encrypting the content with a symmetric key (K),
means (REG) for sending a message (Mes) to a server (LS), the message containing the symmetric key (K) and an identifier (IdC) of the content,
means (TRA) for sending (S4) another request (ReqU2) to the application server, the request (ReqU2) containing the encrypted content, an address of the server (LS) and the identifier (IdC) of the content.

11. A device (MD) for protecting content that is to be sent toward an application server (AS) from a user terminal (UTO) of the owner of the content within a telecommunication network (TN), the device (MD) comprising:
means (SEC) for sending an access request (ReqA) for accessing a content to an application server (AS), the application server (AS) having received a request (ReqU2) containing an encrypted content, an address of a licensing server (LS) and an identifier (IdC) of the content,
means (SEC) for receiving an access response (ResA) from the application server (AS), the access response (ResA) containing the address of the licensing server (LS), the encrypted content and the identifier (IdC) of the content.
means (SEC) for sending a license request (ReqL) to the licensing server (LS), the license request (ReqL) containing a public key (Pu) and the identifier (IdC) of the content, the licensing server (LS) having previously received a message (Mes) containing a symmetric key (K) for the encryption of the content and an identifier (IdC) of the content,
means (SEC) for receiving a license response (ResL) from the licensing server (LS), the license response (ResL) containing a temporary key (Kt) generated by encrypting the symmetric key (K) with the public key (Pu),
means (SEC) for decrypting the temporary key (Kt) with a private key (Pr) associated with the public key (Pu) and retrieving the symmetric key (K),
means (SEC) for decrypting the encrypted content with the symmetric key (K).

12. A server (LS) for protecting content that is to be sent toward an application server (AS) from a user terminal (UTO) of the owner of the content within a telecommunication network (TN), the server (LS) comprising:
means (STO) for receiving a message (Mes) from a controlling device (CD) having received a request (ReqU) from the user terminal (UTO) for uploading a content in the application server (AS), the message (Mes) containing a symmetric key (K) for encryption of a content and an identifier (IdC) of the content,
means (GEN) for receiving a license request (ReqL) from a media device (MD), the license request (ReqL) containing a public key (Pu) and the identifier (IdC) of the content,
means (GEN) for generating a temporary key (Kt) by encrypting the symmetric key (K) with the public key (Pu),
means (GEN) for sending a license response (ResL) to the media device (MD), the license response (ResL) containing a temporary key (Kt).

13. A computer program capable of being implemented within a controlling device (CD) for protecting content that is to be sent toward an application server (AS) from a user terminal (UTO) of the owner of the content within a telecommunication network (TN), said program comprising instructions which, when the program is loaded and executed within said controlling device (CD), carry out the following steps:
receiving (S1) a request (ReqU) from the user terminal (UTO) for uploading a content in the application server (AS), the request containing said content,
encrypting (S2) the content with a symmetric key (K),
sending (S3) a message (Mes) to a licensing server (LS), the message containing the symmetric key (K) and an identifier (IdC) of the content,
sending (S4) another request (ReqU2) to one of the user terminal and the application server, the request (ReqU2) containing the encrypted content, an address of the licensing server (LS) and the identifier (IdC) of the content.

14. A computer program capable of being implemented within a media device (MD) for protecting content that is to be sent toward an application server (AS) from a user terminal (UTO) of the owner of the content within a telecommunication network (TN), said program comprising instructions which, when the program is loaded and executed within said media device (MD), carry out the following steps:
sending (S5) an access request (ReqA) for accessing a content to an application server (AS), the application server (AS) having received a request (ReqU2) containing an encrypted content, an address of a licensing server (LS) and an identifier (IdC) of the content,
receiving (S6) an access response (ResA) from the application server (AS), the access response (ResA) containing the address of the licensing server (LS), the encrypted content and the identifier (IdC) of the content.
sending (S7) a license request (ReqL) to the licensing server (LS), the license request (ReqL) containing a public key (Pu) and the identifier (IdC) of the content, the licensing server (LS) having previously received a message (Mes) containing a symmetric key (K) for the encryption of the content and an identifier (IdC) of the content,
receiving (S9) a license response (ResL) from the licensing server (LS), the license response (ResL) containing a temporary key (Kt) generated by encrypting the symmetric key (K) with the public key (Pu),
decrypting (S10) the temporary key (Kt) with a private key (Pr) associated with the public key (Pu) and retrieving the symmetric key (K),
decrypting (S10) the encrypted content with the symmetric key (K).

15. A computer program capable of being implemented within a server (LS) for protecting content that is to be sent toward an application server (AS) from a user terminal (UTO) of the owner of the content within a telecommunication network (TN), said program comprising instructions which, when the program is loaded and executed within said server (LS), carry out the following steps:
receiving (S3) a message (Mes) from a controlling device (CD) having received a request (ReqU) from the user terminal (UTO) for uploading a content in the application server (AS), the message (Mes) containing a symmetric key (K) for encryption of a content and an identifier (IdC) of the content,
receiving (S7) a license request (ReqL) from a media device (MD), the license request (ReqL) containing a public key (Pu) and the identifier (IdC) of the content,
generating (S8) a temporary key (Kt) by encrypting the symmetric key (K) with the public key (Pu),
sending (S9) a license response (ResL) to the media device (MD), the license response (ResL) containing a temporary key (Kt).

16. A system for protecting content that is to be sent toward an application server (AS) from a user terminal (UTO) of the owner of the content within a telecommunication network (TN), the system comprising:
means (INT) for receiving a request (ReqU) from the user terminal (UTO) for uploading a content in the application server (AS), the request containing said content,
means (ENC) for encrypting the content with a symmetric key (K),
means (REG) for sending a message (Mes) to a server (LS), the message containing the symmetric key (K) and an identifier (IdC) of the content,
means (TRA) for sending another request (ReqU2) to the application server, the request (ReqU2) containing the encrypted content, an address of the server (LS) and the identifier (IdC) of the content,
means (SEC) for sending an access request (ReqA) for accessing a content to the application server (AS),
means (SEC) for receiving an access response (ResA) from the application server (AS), the access response (ResA) containing the address of the licensing server (LS), the encrypted content and the identifier (IdC) of the content.
means (SEC) for sending a license request (ReqL) to the licensing server (LS), the license request (ReqL) containing a public key (Pu) and the identifier (IdC) of the content, the licensing server (LS) having previously received a message (Mes) containing a symmetric key (K) for the encryption of the content and an identifier (IdC) of the content,
means (SEC) for receiving a license response (ResL) from the licensing server (LS), the license response (ResL) containing a temporary key (Kt) generated by encrypting the symmetric key (K) with the public key (Pu),
means (SEC) for decrypting the temporary key (Kt) with a private key (Pr) associated with the public key (Pu) and retrieving the symmetric key (K),
means (SEC) for decrypting the encrypted content with the symmetric key (K).
